# EUROPEAN PATENT SPECIFICATION

(11) **EP 4 206 047 B1**
(45) Date of publication and mention of the grant of the patent: **06.11.2024**
(21) Application number: 20952769.6
(22) Date of filing: 10.09.2020
(51) Int. Cl.: B60T 8/40, B60T 13/74

(54) **HYDRAULIC BRAKING APPARATUS, HYDRAULIC BRAKING SYSTEM, AND VEHICLE**
HYDRAULISCHE BREMSVORRICHTUNG, HYDRAULISCHES BREMSSYSTEM UND FAHRZEUG
APPAREIL DE FREINAGE HYDRAULIQUE, SYSTÈME DE FREINAGE HYDRAULIQUE ET VÉHICULE

(43) Date of publication of application: 05.07.2023
(73) Proprietor: Huawei Technologies Co., Ltd., Shenzhen, Guangdong 518129 (CN)
(72) Inventor: JIA, Guangxin, Shenzhen, Guangdong 518129 (CN); LU, Yuhao, Shenzhen, Guangdong 518129 (CN)
(74) Representative: Maiwald GmbH
(86) International application number: PCT/CN2020/114473
(87) International publication number: WO 2022/051981

(56) References cited:
- CN-A- 1 299 754
- CN-A- 1 299 754
- CN-A- 104 648 368
- CN-A- 106 985 805
- CN-A- 109 562 750
- CN-A- 109 562 750
- CN-A- 110 944 889
- DE-A1- 102015 213 551
- DE-A1- 102015 213 551

## Description

### TECHNICAL FIELD

The present invention relates to the field of hydraulic brake technologies, and in particular, to a hydraulic brake apparatus, a hydraulic brake system, and a vehicle.

### BACKGROUND

A hydraulic brake apparatus usually includes a pedal simulator used to provide a driver with a sense of a pedal reacting force and a spare master cylinder used as a mechanical backup. The pedal simulator and the spare master cylinder are connected by using an oil circuit, and then a valve apparatus is disposed on the oil circuit. Flow of oil between the pedal simulator and the spare master cylinder is controlled by controlling opening and closing of the valve apparatus.

In the conventional technology, because the pedal simulator and the spare master cylinder in the hydraulic brake apparatus are independent of each other, the entire hydraulic brake apparatus has disadvantages such as a large size and a large quantity of parts, resulting in problems such as low production efficiency of manufacturers and high costs.

Chinese patent application CN 109562750 A describes a brake system with a main brake cylinder that has at least one first and one second main brake cylinder piston, which are arranged behind one another and delimit a first and a second pressure chamber to which a respective brake circuit is connected.

### SUMMARY

To resolve the foregoing problems, embodiments of this invention provide a hydraulic brake apparatus, a hydraulic brake system, and a vehicle.

According to a first aspect, this invention provides a hydraulic brake apparatus, including: a housing, where the interior of the housing is a cavity structure, and the cavity structure communicates with the outside; a first piston, disposed in the cavity structure inside the housing, where the first piston and the housing form a first cavity; a baffle plate, disposed in the first cavity and dividing the first cavity into a first sub-cavity and a second sub-cavity, where the first sub-cavity is formed by the housing, the first piston, and the baffle plate, and the second sub-cavity is formed by the first piston and the baffle plate; a second piston, disposed in the cavity structure inside the housing and located outside the first cavity, where the second piston, the first piston, and the housing form a second cavity; and a first elastic component, a second elastic component, and a third elastic component, disposed in the first sub-cavity, the second sub-cavity, and the second cavity respectively and configured to slide the baffle plate, the first piston, and the second piston in the cavity structure inside the housing when the second piston is subjected to an external acting force. The housing includes a first through hole and a second through hole. The first through hole is disposed in a first position of the housing. The second through hole is disposed in a second position of the housing. The first position is a position in which the second piston can slide in the cavity structure inside the housing. The second position is a position in which the first piston can slide in the cavity structure inside the housing. The second piston includes a third through hole. When the second piston slides to the third through hole and is coupled to the first through hole, the second cavity communicates with the outside. When the second piston slides to the third through hole and is staggered from the first through hole, the second cavity is isolated from the outside. The first piston includes a fourth through hole and a fifth through hole. The fourth through hole is disposed in a third position of the first piston. The fifth through hole is disposed in a fourth position of the first piston. The third position is a position that is of the first piston and that constitutes the first sub-cavity. The fourth position is a position that is of the first piston and that constitutes the second sub-cavity. When the fourth through hole and/or the fifth through hole are/is coupled to the second through hole, the first sub-cavity and/or the second sub-cavity communicate/communicates with the outside. When the fourth through hole and/or the fifth through hole are/is staggered from the second through hole, the first sub-cavity and/or the second sub-cavity are/is isolated from the outside.

In this implementation, two pistons and one baffle plate are disposed in the cavity structure inside the housing by using a plurality of elastic assemblies, thereby forming three cavities. In a process of sliding an external piston, an internal piston and the baffle plate are driven, and then a simulated braking effect is achieved by using through holes in components. Compared with the prior art, the hydraulic brake apparatus of this invention has a small size and a few parts, thereby greatly improving production efficiency of manufacturers and reducing costs.

In an implementation, the housing further includes a sixth through hole and a seventh through hole. The sixth through hole is disposed in a position that is of the housing and that constitutes the second cavity. The seventh through hole is disposed in a position that is of the housing and that constitutes the first sub-cavity.

In this implementation, the sixth through hole and the seventh through hole are formed in the housing. When the two through holes are coupled to an external brake apparatus, oil can be guided into the brake apparatus, thereby implementing a braking function of a vehicle.

In an implementation, the apparatus further includes at least one partition apparatus, coupled to the sixth through hole and the seventh through hole and configured to: control the sixth through hole and the seventh through hole to communicate with or be isolated from the outside.

In this implementation, the partition apparatus is disposed on the sixth through hole and the seventh through hole, thereby controlling oil to flow out of the sixth through hole and the seventh through hole. The partition apparatus is in a closed state when powered on, so that the sixth through hole and the seventh through hole in the housing are in a blocked state. When the partition apparatus is in an open state when powered off, so that the sixth through hole and the seventh through hole can guide oil to the outside.

In an implementation, the apparatus further includes a solenoid valve, coupled to the second through hole and configured to: control the second through hole to communicate with or be isolated from the outside.

In this implementation, the solenoid valve is coupled to the second through hole. The solenoid valve is in an open state when powered on. In this case, external oil is allowed to enter the second through hole in the housing, and oil is also allowed to flow to the outside from the second through hole. The solenoid valve is in a closed state when powered off. In this case, the second through hole in the housing is in a blocked state.

In an implementation, the apparatus further includes a one-way valve, coupled to the second through hole and configured to: control external oil to enter the second through hole.

In this implementation, the one-way valve is coupled to the second through hole, so that external oil can enter the second through hole in the housing, but oil cannot flow to the outside from the second through hole. Therefore, it is ensured that a cavity inside the housing has oil inside at all times, and the following problem is resolved: The first piston is incompressible due to lack of oil, which makes the brake apparatus to fail in generating pressure and to lose effect.

In an implementation, the apparatus further includes a first sealing component, disposed in a position that is of the cavity structure inside the housing and that is at a periphery of the first through hole and configured to seal a gap between the cavity structure inside the housing and the second piston and a gap between the first through hole and the second piston.

In an implementation, the apparatus further includes a second sealing component, disposed in a position that is of the cavity structure inside the housing and that is at a periphery of the second through hole and configured to seal a gap between the cavity structure inside the housing and the first piston and a gap between the second through hole and the first piston.

In an implementation, the apparatus further includes a third sealing component, disposed on a side surface that is of the baffle plate and that is in contact with the first piston and configured to seal a gap between the baffle plate and the first piston.

In an implementation, the apparatus further includes a pedal push rod. One end of the pedal push rod is coupled to a surface that is of the second piston and that is opposite to a side surface that constitutes the second cavity. The pedal push rod is configured to push the second piston when the pedal push rod is subjected to an external acting force.

According to a second aspect, an embodiment of this invention further provides a vehicle. The vehicle includes the hydraulic brake apparatus according to the implementations of the first aspect.

According to a third aspect, an embodiment of this invention further provides a hydraulic brake system. The hydraulic brake system includes a reservoir apparatus, a pressure providing and adjusting apparatus, a brake apparatus, and the hydraulic brake apparatus according to the implementations of the first aspect.

### BRIEF DESCRIPTION OF DRAWINGS

The following briefly describes accompanying drawings required for describing embodiments or the prior art.
FIG. 1 is a schematic diagram of a structure of a section of a hydraulic brake apparatus according to an embodiment of this invention;
FIG. 2 is a schematic diagram of a three-dimensional structure of a housing according to an embodiment of this invention;
FIG. 3 is a schematic diagram of a three-dimensional internal structure of a housing according to an embodiment of this invention;
FIG. 4 is a schematic diagram of a three-dimensional structure of a piston according to an embodiment of this invention;
FIG. 5 is a schematic diagram of a three-dimensional structure of a piston according to an embodiment of this invention;
FIG. 6 is a schematic architectural diagram of a hydraulic brake system according to an embodiment of this invention;
FIG. 7 is a schematic diagram of an oil flow direction in a hydraulic brake system in an oil injection state according to an embodiment of this invention;
FIG. 8 is a schematic diagram of an oil flow direction in a hydraulic brake system when an electronic braking function is enabled in a braking state according to an embodiment of this invention; and
FIG. 9 is a schematic diagram of an oil flow direction in a hydraulic brake system when a standby braking function is enabled in a braking state according to an embodiment of this invention.

### DESCRIPTION OF EMBODIMENTS

The following describes technical solutions in embodiments of this invention with reference to the accompanying drawings in the embodiments of this invention.

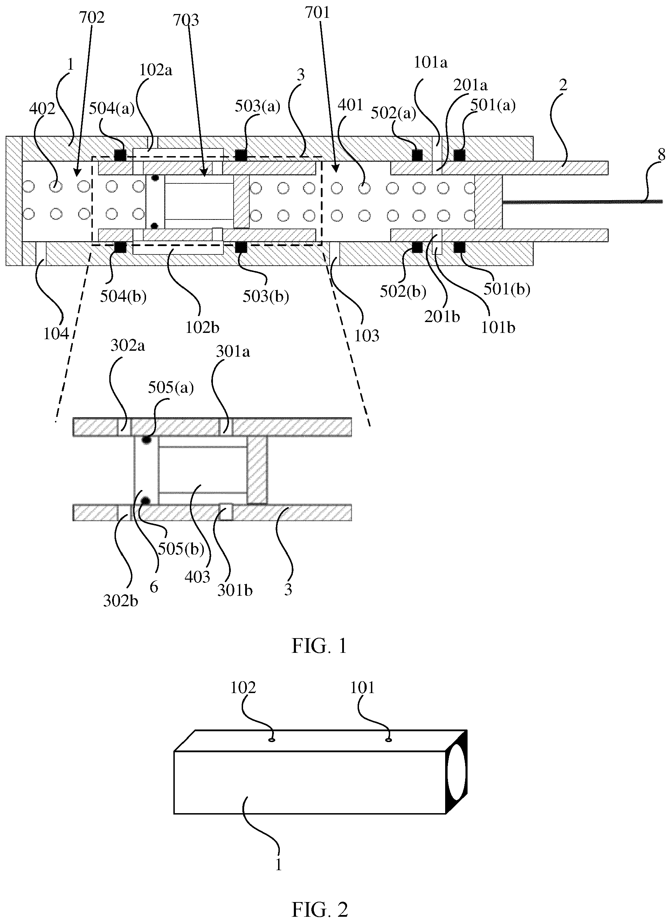

FIG. 1 is a schematic diagram of a structure of a hydraulic brake apparatus according to an embodiment of this invention. shown in FIG. 1, the hydraulic brake apparatus provided in this embodiment of this invention mainly includes a housing 1, a piston 2, a piston 3, an elastic component 401, an elastic component 402, an elastic component 403, and a baffle plate 6. A side surface on one side of the baffle plate 6 is coupled to the piston 3 by using the elastic component 403, so that the baffle plate 6 and the piston 3 form a cavity 703. A side surface on the other side of the baffle plate 6 is coupled to a bottom of a cavity structure inside the housing 1 by using the elastic component 402, so that the baffle plate 6, the piston 3, and the housing 1 form a cavity 702. The piston 2 is coupled to the piston 3 by using the elastic component 401, so that the piston 2, the housing 1, and the piston 3 form a cavity 701.

The housing 1 is generally made of a metal, an alloy, or another material. A shape of an outer surface of the housing 1 may be a "cuboid", a "cylinder", a "test tube" (having a hemispherical tail), or the like. Alternatively, the outer surface of the housing 1 may be made, according to remaining space that is of the hydraulic brake apparatus and that is used for mounting of the housing 1, into a shape corresponding to the remaining space. Alternatively, the housing 1 may have a structure of another component (the another component may be used as the housing 1 in this invention by punching a "cylindrical" hole). This is not limited herein in this invention.

The cavity structure inside the housing 1 is generally a cylinder, so that the piston 2 and the piston 3 can slide in the cavity structure inside the housing 1 conveniently. In a few cases, the cavity structure may also be a cuboid. A side surface of the cavity structure inside the housing 1 communicates with the exterior of the housing 1, so that subsequently, the piston 2 and the piston 3 can be embedded into the cavity structure inside the housing 1 conveniently.

For example, FIG. 2 shows a housing 1. A shape of an outer surface of the housing 1 is a "cuboid". A cavity structure inside the housing 1 is a "cylinder". An outlet of the cavity structure is formed in a side surface of the outer surface of the housing 1.

It should be noted that the following describes structures of the piston 2 and the piston 3, and coupling relationships between the piston 2 and the housing 1 and between the piston 3 and the housing 1. Therefore, it is specified herein in this invention that technical solutions of this invention are described by using the structure shown in FIG. 2 as a shape of the housing 1. In addition, this invention further relates to positions subsequently. Therefore, it is also specified herein that, as shown in FIG. 2, in the housing 1, a surface facing a reader is specified as a front surface, a surface away from the reader is specified as a rear surface, a surface including a through hole 101 and a through hole 102 is specified as an upper surface, a surface opposite to the upper surface is specified as a lower surface, a surface including an outlet of the cavity structure inside the housing 1 is specified as a right surface, and a surface opposite to the right surface is specified as a left surface. Similarly, because the interior of the housing 1 is of a cylindrical structure, an orientation of the outer surface of the housing 1 is used as a reference for description of an orientation inside the housing 1.

The through hole 101 and the through hole 102 are formed in the upper surface of the housing 1. The through hole 101 is disposed in a position that is on the upper surface and that is close to the right surface. The through hole 102 is formed in the middle of the upper surface or in a position that is on the upper surface and that is close to the left surface. The through holes are used to allow oil to enter and exit the cavity structure inside the housing 1.

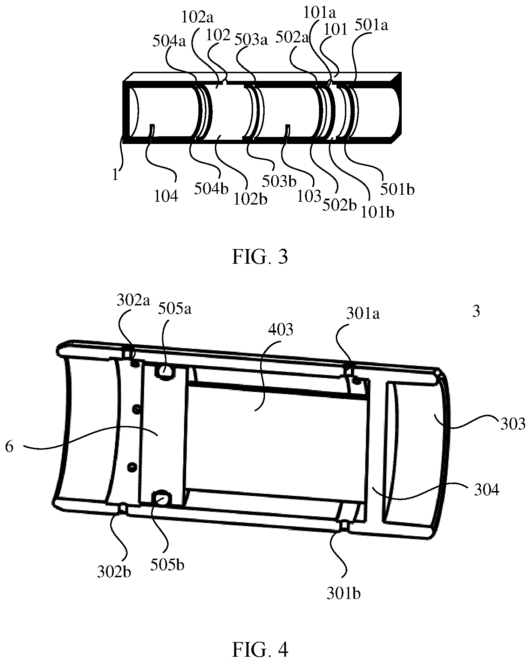

For example, as shown in FIG. 3, from a perspective of the outer surface of the housing 1, two circular through holes, namely, the through hole 101 and the through hole 102, are formed in the upper surface of the housing 1 from left to right sequentially. From a perspective of the cavity structure inside the housing 1, two circular grooves are formed in positions, corresponding to each of the through hole 101 and the through hole 102, on a surface of the cavity structure. The circular grooves corresponding to the through hole 101 are denoted as 101a and 101b in FIG. 3. The circular grooves corresponding to the through hole 102 are denoted as 102a and 102b in FIG. 3.

Two through holes are formed in the lower surface (which is used as an example herein in this invention and may be any surface) of the housing 1, and are a through hole 103 and a through hole 104 respectively. The through hole 103 is disposed in a position that is on the lower surface and that is close to the right surface. The through hole 104 is disposed in a position that is on the lower surface and that is close to the left surface. The through holes are used to allow oil to enter and exit the cavity structure inside the housing 1.

For example, as shown in FIG. 3, from a perspective of the outer surface of the housing 1 (as being disposed on the ground, the lower surface is not shown in this figure), two circular through holes, namely, the through hole 103 and the through hole 104, are formed in the lower surface of the housing 1 from left to right sequentially. From a perspective of the cavity structure inside the housing 1, two grooves are formed in positions, corresponding to each of the through hole 103 and the through hole 104, on the surface of the cavity structure, thereby avoiding blockage caused by too small openings of the through holes inside the housing 1.

Circular grooves (501a and 501b), circular grooves (502a and 502b), circular grooves (503a and 503b), and circular grooves (504a and 504b) are also formed in the surface of the cavity structure inside the housing 1, and are used for mounting of sealing components 501, 502, 503, and 504 respectively. The circular grooves (501a and 501b) and the circular grooves (502a and 502b) are respectively formed in two sides of the circular grooves (101a and 101b) that correspond to the through hole 101. The circular grooves (503a and 503b) and the circular grooves (504a and 504b) are respectively formed in two sides of the circular grooves (102a and 102b) that correspond to the through hole 102.

Generally, a material of the piston 3 is the same as that of the housing 1. Alternatively, the material of the piston 3 may be different from that of the housing 1. The piston 3 is configured to be embedded into the cavity structure inside the housing 1, so that the piston 3 and the cavity structure inside the housing 1 form a sealed cavity. A section that is of the piston 3 and that is perpendicular to a direction in which the piston 3 is embedded into the cavity structure has the same area and shape as a section of the cavity structure inside the housing 1, thereby ensuring that when the piston 3 is embedded into the cavity structure inside the housing 1, the piston 3 is closely coupled to the housing 1.

For example, as shown in FIG. 4, the piston 3 includes a first component 303 and a second component 304. A shape of the first component 303 is a "cylindrical" tubular structure. A radius of an outer circle of the first component 303 is equal to a radius of the cavity structure inside the housing 1. The second component 304 is disposed inside the first component 303, and divides the interior of the first component 303 into two grooves. One groove (referred to as a "first groove" below) is located in a position that is of the piston 3 and that faces the bottom of the cavity structure inside the housing 1; and the other groove (referred to as a "second groove" below) is located in a position that is of the piston 3 and that faces the outlet of the cavity structure inside the housing 1.

The baffle plate 6 is disposed in the first groove by using the elastic component 403. The baffle plate 6 and the first groove jointly form a cavity 703. When being subjected to an external acting force, the baffle plate 6 may slide in the first groove under the action of the elastic component 403, thereby changing a volume of the cavity 703.

Optionally, the baffle plate 6 includes grooves (505a and 505b). The grooves (505a and 505b) are formed in a side surface that is of the baffle plate 6 and that is in contact with the piston 3, and are used for mounting of the sealing component 505, thereby ensuring airtightness of the cavity 703.

In addition, a side that is of the baffle plate 6 and that faces the bottom of the cavity structure inside the housing 1 is connected to one end of the elastic component 402; and the other end of the elastic component 402 is connected to the bottom of the cavity structure inside the housing 1, so that the baffle plate 6, the piston 3, and the housing 1 jointly form a cavity 702.

The piston 3 includes a through hole 301 and a through hole 302. The through hole 301 is disposed in a position that is of the piston 3 and that constitutes the cavity 703. The through hole 302 is disposed in a position that is of the piston 3 and that constitutes the cavity 702. Therefore, when the through hole 301 is coupled to the through hole 102 in the housing 1, oil can enter and exit the cavity 703 through the through hole 102 and the through hole 301; and when the through hole 302 is coupled to the through hole 102 in the housing 1, oil can enter and exit the cavity 702 through the through hole 102 and the through hole 302. If the through hole 301 and the through hole 302 are coupled to the through hole 102 in the housing 1 at the same time, oil can enter and exit both the cavity 703 and the cavity 702.

For example, as shown in FIG. 4, through holes (301a and 301b) and through holes (302a and 302b) are formed in the first component 303. The through holes (301a and 301b) are located in the cavity 703. The through holes (302a and 302b) are located out of the cavity 703. In a process of sliding the piston 3 after the cavity 702 and the cavity 703 are filled with oil, when the through holes (301a and 301b) are coupled to the circular grooves (102a and 102b), oil can enter and exit the cavity 703; when the through holes (302a and 302b) are coupled to the circular grooves (102a and 102b), oil can enter and exit the cavity 702; and when the through holes (301a and 301b) and the through holes (302a and 302b) are coupled to the circular grooves (102a and 102b) at the same time, oil can enter and exit both the cavity 703 and the cavity 702.

A distance between the through holes (301a and 301b) and the through holes (302a and 302b) shall not exceed widths of the circular grooves (102a and 102b). Otherwise, oil cannot enter and exit both the cavity 703 and the cavity 702.

Generally, a material of the piston 2 is also the same as that of the housing 1. Alternatively, the material of the piston 2 may be different from that of the housing 1. The piston 2 is configured to be embedded into the outlet of the cavity structure inside the housing 1, so that the piston 2, the housing 1, and the piston 3 form a cavity 701. A section that is of the piston 2 and that is perpendicular to a direction in which the piston 2 is embedded into the cavity structure has the same area and shape as a section of the outlet of the cavity structure inside the housing 1, thereby ensuring that when the piston 2 is embedded into the outlet of the cavity structure inside the housing 1, the piston 2 is closely coupled to the housing 1.

The piston 2 includes a through hole 201, used to: allow oil to enter and exit the cavity 701 when the through hole 201 is coupled to the through hole 101 in the housing 1.

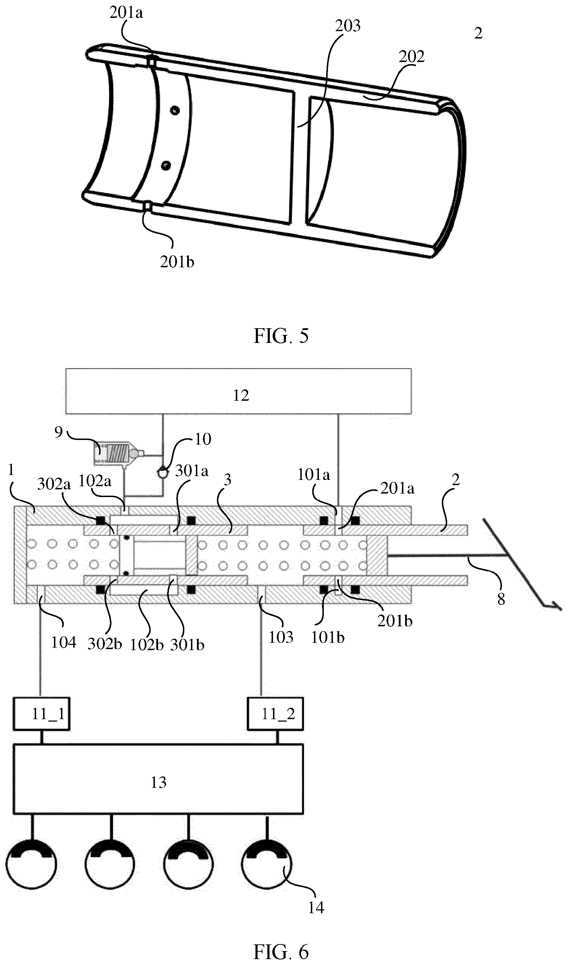

For example, as shown in FIG. 5, a shape of the piston 2 is similar to that of the piston 3; and the piston 2 includes a third component 202 and a fourth component 203. A shape of the third component 202 is a "cylindrical" tubular structure. A radius of an outer circle of the third component 202 is equal to a radius of the cavity structure inside the housing 1. The fourth component 203 is disposed inside the third component 202, and divides the interior of the third component 202 into two grooves. One groove (referred to as a "third groove" below) is located in a position facing the piston 3; and the other groove (referred to as a "fourth groove" below) is located in a position facing the outside. Through holes (201a and 201b) are formed in the third component 202 of the piston 2, and are both formed in positions that are of the third component 202 and that constitute the third groove. In a process of sliding the piston 2 after the cavity 701 is filled with oil, when the through holes (201a and 201b) are coupled to the circular grooves (101a and 101b), oil can enter and exit the cavity 701; and when the through holes (201a and 201b) are staggered from the circular grooves (101a and 101b), oil cannot enter and exit the cavity 701.

In this invention, the elastic component 401, the elastic component 402, and the elastic component 403 are configured to fix the baffle plate 6, the piston 3, and the piston 2 in the cavity structure inside the housing 1, thereby preventing the baffle plate 6, the piston 3, and the piston 2 from shaking in the cavity structure inside the housing 1. The elastic component 401, the elastic component 402, and the elastic component 403 are further configured to: slide the baffle plate 6, the piston 3, and the piston 2 in the cavity structure inside the housing 1 after the piston 2 receives an external acting force, thereby changing volumes of the cavity 701, the cavity 702, and the cavity 703.

In addition, when the cavity 701, the cavity 702, and the cavity 703 are in a normal state (that is, pressure of each cavity is equal to that of the outside), and the piston 2 is not subjected to any external force, the three elastic assemblies fix the piston 2 in a position that is in the cavity structure inside the housing 1 and where the through hole 201 is coupled to the through hole 101; fix the piston 3 in a position that is in the cavity structure inside the housing 1 and where the through hole 301 and the through hole 302 are coupled to the through hole 102; and fix the baffle plate 6 in a position between the through hole 301 and the through hole 302 of the piston 3.

After the piston 2 is subjected to an external acting force, the three elastic assemblies can slide the piston 2, the piston 3, and the baffle plate 6 to the following state: The piston 2 is fixed in a position that is in the cavity structure inside the housing 1 and where the through hole 201 and the through hole 101 are staggered; the piston 3 is fixed in a position that is in the cavity structure inside the housing 1 and where the through hole 301 and the through hole 102 are coupled but the through hole 302 and the through hole 102 are staggered; and the baffle plate 6 is fixed in a position between the through hole 301 and the through hole 302 of the piston 3.

For example, in a case that the cavity 701, the cavity 702, and the cavity 703 are fully filled with oil, and that the through hole 103 and the through hole 104 in the housing 1 are in a blocked state, when the piston 2 slides into the cavity structure inside the housing 1 under the action of an external force, the through hole 201 in the piston 2 is staggered from and uncoupled to the through hole 101 in the housing 1, and the cavity 701 is in a sealed state and is incompressible. As a result, the cavity 701 and the elastic component 401 push the piston 3 to slide towards the bottom of the cavity structure inside the housing 1. In this case, the through hole 302 in the piston 3 is staggered from and uncoupled to the through hole 102 in the housing 1, so that the cavity 702 is in a sealed state and is incompressible. In this case, the through hole 301 in the piston 3 is still coupled to the through hole 102 in the housing 1, and the cavity 703 is not in a sealed state. Therefore, the cavity 701 and the elastic component 401 continue pushing the piston 3 to slide towards the bottom of the cavity structure inside the housing 1, thereby compressing the volume of the cavity 703, and generating a process of pushing the piston 2.

In addition, it can be learned that a sliding progress of the piston 2 is related to the widths of the circular grooves (102a and 102b) in the cavity structure inside the housing 1, that is, a greater width of the circular grooves (102a and 102b) leads to a longer sliding progress of the piston 2.

The hydraulic brake apparatus provided in this invention further includes a pedal push rod 8. One end of the pedal push rod 8 is disposed on a side surface that is of the piston 2 and that faces the outside when the piston 2 is embedded in the cavity structure inside the housing 1. The pedal push rod 8 is used to transmit, to the piston 2, an acting force exerted by a driver when the other end of the pedal push rod 8 is subjected to the acting force, so that the piston 2 is enabled to slide in the cavity structure inside the housing 1. In addition, the piston 3 and the baffle plate 6 are driven to slide in the cavity structure inside the housing 1 under the action of the elastic component 401, the elastic component 402, and the elastic component 403.

The hydraulic brake apparatus provided in this invention further includes a solenoid valve 9. The solenoid valve 9 is connected to the through hole 102 in the housing 1 by using an oil pipe. The solenoid valve 9 is in an open state when powered on. In this case, external oil can enter the through hole 102 in the housing 1; and oil in the cavity 702 and/or the cavity 703 can flow to the outside. The solenoid valve 9 is in a closed state when powered off. In this case, the through hole 102 in the housing 1 is in a blocked state. The solenoid valve 9 may be connected to a control unit. When the detection unit detects that the piston 2 is displaced, the control unit controls the solenoid valve 9 to be powered on. When the detection unit detects that the piston 2 is not displaced, the solenoid valve 9 is controlled to be not electrified. This is not limited herein in this invention.

It should be noted herein that the oil pipe mentioned above may be a common conduit. However, if the housing 1 in this invention is obtained by forming a "cylindrical" hole in a metal component, the conduit is a through hole in the metal component. The through hole directly communicates with a cavity wall of the "cylindrical" housing. Then, one end of the solenoid valve 9 is directly embedded into an end, facing the outside, of the through hole.

The hydraulic brake apparatus provided in this invention further includes a one-way valve 10. The one-way valve 10 is connected to the through hole 102 in the housing 1 by using an oil pipe, and is configured to allow external oil to enter the through hole 102 in the housing 1 without allowing oil in the cavity 702 and/or the cavity 703 to flow to the outside, thereby ensuring that the cavity 702 and the cavity 703 have oil inside at all times, and the following problem is resolved: The piston 3 is incompressible due to lack of oil, which makes the brake apparatus to fail in generating pressure and to lose effect.

The hydraulic brake apparatus provided in this invention further includes at least one partition apparatus 11. Each partition apparatus 11 is connected to the through hole 103 and the through hole 104 in the housing 1 by using an oil pipe. The partition apparatus 11 is in a closed state when powered on, so that the through hole 103 and the through hole 104 in the housing 1 are in a blocked state. The partition apparatus 11 is in an open state when powered off, so that oil in the cavity 701 and the cavity 702 can flow to the outside.

According to the hydraulic brake apparatus provided in this invention, two pistons and one baffle plate are disposed in the cavity structure inside the housing 1 by using a plurality of elastic assemblies, thereby forming three cavities. In a process of sliding an external piston, an internal piston and the baffle plate are driven, and then a simulated braking effect is achieved by using through holes in components. Compared with the prior art, the hydraulic brake apparatus of this application has a small size and a few parts, thereby greatly improving production efficiency of manufacturers and reducing costs.

FIG. 6 is a schematic architectural diagram of a hydraulic brake system according to an embodiment of this invention. As shown in FIG. 6, the hydraulic brake apparatus provided in embodiments of this invention is applied to a vehicle, and is used as a part of a hydraulic brake system of the vehicle. The hydraulic brake system further includes a reservoir apparatus 12, a pressure providing and adjusting apparatus 13, and a brake wheel cylinder 14.

The reservoir apparatus 12 is a fuel tank for storing brake fluid, and is connected to the solenoid valve 9, the one-way valve 10, and the through hole 101 in the housing 1 by using oil pipes respectively. When the through hole 101 in the housing 1 is coupled to the through hole 201 in the piston 2, and the through hole 102 in the housing 1 is coupled to the through hole 301 and/or the through hole 302 in the piston 3, oil in the reservoir apparatus 12 can be guided into the cavity 701, the cavity 702, and the cavity 703, or oil in the cavity 701, the cavity 702, and the cavity 703 can be guided into the reservoir apparatus 12, thereby ensuring that oil in each cavity is in a balanced state.

The brake wheel cylinder 14 is a device having a braking function, is connected to the partition apparatus 11 by using an oil pipe, and is configured to: when the partition apparatus 11 in an open state, press extruded oil in the cavity 701 and the cavity 702 into the pressure providing and adjusting apparatus 13 through the through hole 103 and the through hole 104, so that pressure of the cavity 701 and the cavity 702 is transferred to the brake wheel cylinder 14, and a piston in the brake wheel cylinder 14 is pushed to perform braking on wheels of the vehicle.

The pressure providing and adjusting apparatus 13 is connected between the partition apparatus 11 and the brake wheel cylinder 14, and is configured to: detect whether there is oil passing through the pressure providing and adjusting apparatus 13; when it is detected that there is no oil passing through the pressure providing and adjusting apparatus 13, detect a progress distance of the piston 2 or an acting force exerted on the pedal push rod 8; convert the progress distance of the piston 2 or the acting force exerted on the pedal push rod 8 into a corresponding acting force; and use the corresponding acting force to push the piston in the brake wheel cylinder 14 to perform braking on the wheels of the vehicle.

It should be noted that the hydraulic brake system provided in this invention includes an electronic brake system and a standby brake system. An implementation process of the electronic brake system is as follows: A control unit (not shown in the figure) of the vehicle controls the solenoid valve 9 and the partition apparatus 11 to be powered on; and controls, according to a detection result that indicates an acting force exerted on the pedal push rod 8 by a driver or a progress distance of the piston 2, the pressure providing and adjusting apparatus 13 to generate a corresponding acting force, thereby pushing the piston in the brake wheel cylinder 14 to perform braking on the wheels of the vehicle. An implementation process of the standby brake system is as follows: In a case that the electronic brake system is not electrified, the solenoid valve 9 and the partition apparatus 11 are powered off; the driver exerts an acting force on the pedal push rod 8; oil in the cavity 701 and the cavity 702 flows into the brake wheel cylinder 14 through the partition apparatus 11 and the pressure providing and adjusting apparatus 13; and the piston is pushed to perform braking on the wheels of the vehicle.

The following describes, by using three embodiments, three cases in which the hydraulic brake system in this embodiment of this invention starts the electronic brake system in an oil filling state, starts the electronic brake system in a braking state, and starts the standby brake system in the braking state.

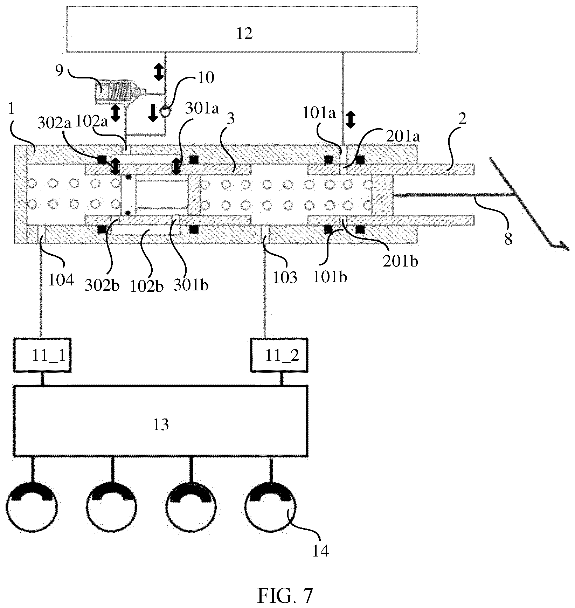

As shown in FIG. 7, in a case that the hydraulic brake system is in the oil filling state, the control unit of the vehicle controls the partition apparatus 11 and the solenoid valve 9 to be powered on. In this case, the through hole 103 and the through hole 104 in the housing 1 are in a blocked state because the partition apparatus 11 is powered on; and oil can flow into or out of the reservoir apparatus 12 because the solenoid valve 9 is powered on.

Because there is no acting force exerted by the driver on the pedal push rod 8, the piston 2 is in a position in which the through hole 201 in the cavity structure inside the housing 1 is coupled to the through hole 101 in the housing 1, and the piston 3 is in a position in which the through hole 301 and the through hole 302 in the cavity structure inside the housing 1 are coupled to the through hole 102 in the housing 1, that is, the cavity 701, the cavity 702, and the cavity 703 are all communicate with the reservoir apparatus 12. If there is no oil in the cavity 701, the cavity 702, and the cavity 703, oil stored in the reservoir apparatus 12 flows into the cavity 701 directly, and flows into the cavity 702 and the cavity 703 through the solenoid valve 9 and the one-way valve 10. If there is oil in the cavity 701, the cavity 702, and the cavity 703, and the cavity 701, the cavity 702, and the cavity 703 have the same pressure as the reservoir apparatus 12, oil in the reservoir apparatus 12 does not flow. If there is oil in the cavity 701, the cavity 702, and the cavity 703, and pressure of the cavity 701, the cavity 702, and the cavity 703 is higher than that of the reservoir apparatus 12, oil in the cavity 701 flows into the reservoir apparatus 12 directly, and oil in the cavity 702 and the cavity 703 flows into the reservoir apparatus 12 through the solenoid valve 9.

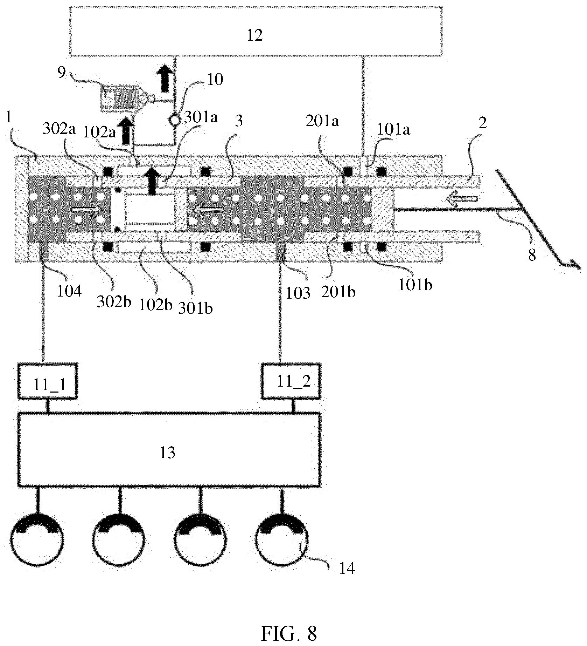

As shown in FIG. 8, when the electronic brake system of the hydraulic brake system is started in the braking state, the control unit of the vehicle controls the solenoid valve 9 and the partition apparatus 11 to be powered on. In this case, oil can flow into or out of the reservoir apparatus 12 because the solenoid valve 9 is powered on; and the through hole 103 and the through hole 104 in the housing 1 are in a blocked state because the partition apparatus 11 is powered on.

After receiving an acting force exerted by a driver on the pedal push rod 8, the pedal push rod 8 transmits the acting force to the piston 2, so that the piston 2 slides into the cavity structure inside the housing 1. At this time, the through hole 201 and the through hole 101 in the housing 1 are switched from a coupled state to a staggered state. As a result, the cavity 701 is in a sealed state and is incompressible, and thus the elastic component 401 and oil in the cavity 701 transmit the acting force to the piston 3. After being subjected to the acting force, the piston 3 slides into the cavity structure inside the housing 1. In this case, the through hole 301 and the through hole 302 are switched from a state in which the through hole 301 and the through hole 302 are coupled to the through hole 102 in the housing 1 to a state in which the through hole 301 is coupled to the through hole 102 in the housing 1 but the through hole 302 is staggered from the through hole 102 in the housing 1. As a result, the cavity 702 is also in a sealed state and is incompressible, but the cavity 703 still communicates with the reservoir apparatus 12 through the through hole 301, the through hole 102, and the solenoid valve 9. Therefore, the elastic component 402 and oil in the cavity 702 push the baffle plate 6 to slide towards the outside of the cavity structure inside the housing 1, thereby compressing the volume of the cavity 703 together with the piston 3, and pressing oil in the cavity 703 into the reservoir apparatus 12. Thus, a process of sliding the piston 2 into the cavity structure inside the housing 1 is realized, and the driver can have a sense of braking as stepping on a pedal.

At the same time, after detecting that there is an acting force on the pedal push rod 8 or that the piston 2 progresses, the control unit of the vehicle controls the pressure providing and adjusting apparatus 13 to generate a corresponding acting force; and then, the piston in the brake wheel cylinder 14 is pushed to perform braking on the wheels of the vehicle.

In addition, the control unit of the vehicle can control an release degree of the solenoid valve 9. When the release degree of the solenoid valve 9 is relatively small, a speed at which oil in the cavity 703 flows into the reservoir apparatus 12 is relatively slow. In this case, a reacting force is generated on the baffle plate 6 and the piston 2, and is then fed back to the pedal push rod 8 through the piston 2, so that the driver can feel a change of the pedal when stepping on the pedal.

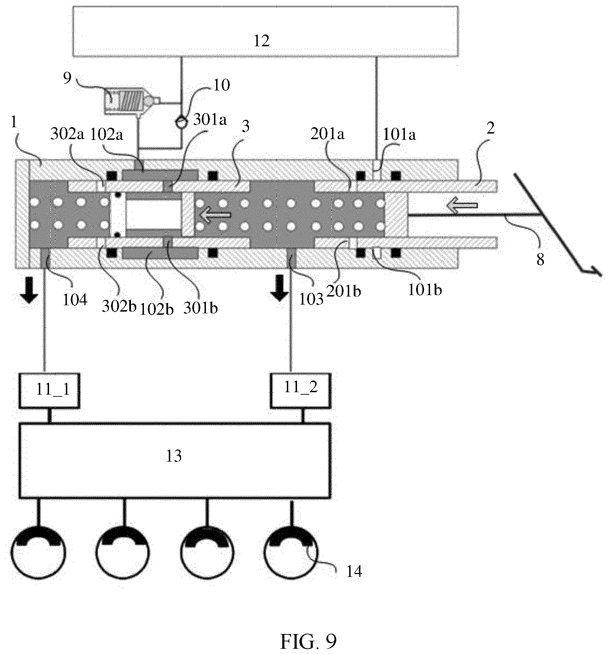

As shown in FIG. 9, when the standby brake system of the hydraulic brake system is started in the braking state, both the solenoid valve 9 and the partition apparatus 11 are in a powered-off state. In this case, oil can only flow out of the reservoir apparatus 12 through the one-way valve 10 because the solenoid valve 9 is powered off; and the through hole 103 and the through hole 104 in the housing 1 are in an open state because the partition apparatus 11 is powered off.

After receiving an acting force exerted by a driver on the pedal push rod 8, the pedal push rod 8 transmits the acting force to the piston 2, so that the piston 2 slides into the cavity structure inside the housing 1. At this time, the through hole 201 and the through hole 101 in the housing 1 are switched from a coupled state to a staggered state, and oil in the cavity 701 may flow out through the through hole 103 in the housing 1. At the same time, the oil in the cavity 701 and the elastic component 401 transmit a part of the acting force to the piston 3. After being subjected to the acting force, the piston 3 slides into the cavity structure inside the housing 1. At this time, oil cannot be guided out through the through hole 102 in the housing 1, regardless of whether the through hole 301 and the through hole 302 are coupled to or staggered from the through hole 102 in the housing 1. Therefore, the cavity 703 is in a sealed state and is incompressible, but oil in the cavity 702 can flow out through the through hole 104 in the housing 1. Because oil in the cavity 701 and the cavity 702 is reduced, a process of sliding the piston 2 into the cavity structure inside the housing 1 is realized, and the driver can have a sense of braking as stepping on a pedal.

In a possible embodiment, in a case that the pressure providing and adjusting apparatus 13 is powered on, oil flowing out of the through hole 103 and the through hole 104 in the housing 1 flows through the pressure providing and adjusting apparatus 13, and the pressure providing and adjusting apparatus 13 pressurizes the oil, so that the pressure of the oil is high enough to push the piston in the brake wheel cylinder 14 to perform braking on the wheels of the vehicle; and then the pressurized oil is guided into the brake wheel cylinder 14 to push the piston to perform braking on the wheels of the vehicle.

In another possible embodiment, when the pressure providing and adjusting apparatus 13 is not electrified, oil flowing out of the through hole 103 and the through hole 104 in the housing 1 directly enters the brake wheel cylinder 14 after flowing through the partition apparatus 11 and the pressure providing and adjusting apparatus 13, so that the piston in the brake wheel cylinder 14 is pushed to perform braking on the wheels of the vehicle.

According to the hydraulic brake system provided in this invention, an electronic braking function and a standby braking function of the vehicle are fulfilled by connecting the hydraulic brake apparatus with the reservoir apparatus, the pressure providing and adjusting apparatus, and the brake wheel cylinder, so that the braking functions of the vehicle can be fulfilled regardless of a state of the vehicle. This ensures safety of the vehicle during driving or parking.

An embodiment of this invention further provides a vehicle. The vehicle includes the hydraulic brake apparatus shown in FIG. 1 to FIG. 5, or includes the hydraulic brake system shown in FIG. 1 to FIG. 9.

## Claims

1. A hydraulic brake apparatus, comprising:
a housing (1), wherein the interior of the housing (1) is a cavity structure, and the cavity structure communicates with the outside;
a first piston (3), disposed in the cavity structure inside the housing (1), wherein the first piston (3) and the housing (1) form a first cavity;
a baffle plate (6), disposed in the first cavity and dividing the first cavity into a first sub-cavity (702) and a second sub-cavity (703), wherein the first sub-cavity (702) is formed by the housing (1), the first piston (3), and the baffle plate (6), and the second sub-cavity (703) is formed by the first piston (3) and the baffle plate (6);
a second piston (2), disposed in the cavity structure inside the housing (1) and located outside the first cavity, wherein the second piston (2), the first piston (3), and the housing (1) form a second cavity (701); and
a first elastic component (402), a second elastic component (403), and a third elastic component (401), disposed in the first sub-cavity (702), the second sub-cavity (703), and the second cavity (701) respectively and configured to slide the baffle plate (6), the first piston (3), and the second piston (2) in the cavity structure inside the housing (1) when the second piston (2) is subjected to an external acting force, wherein
the housing (1) comprises a first through hole (101) and a second through hole (102), wherein the first through hole (101) is disposed in a first position of the housing (1), the second through hole (102) is disposed in a second position of the housing (1), the first position is a position in which the second piston (2) can slide in the cavity structure inside the housing (1), and the second position is a position in which the first piston (3) can slide in the cavity structure inside the housing (1);
the second piston (2) comprises a third through hole (201), wherein when the second piston (2) slides to the third through hole (201) and is coupled to the first through hole (101), the second cavity (701) communicates with the outside; or when the second piston (2) slides to the third through hole (201) and is staggered from the first through hole (101), the second cavity (701) is isolated from the outside; and
the first piston (3) comprises a fourth through hole (302) and a fifth through hole (301), wherein the fourth through hole (302) is disposed in a third position of the first piston (3), the fifth through hole (301) is disposed in a fourth position of the first piston (3), the third position is a position that is of the first piston (3) and that constitutes the first sub-cavity (702), and the fourth position is a position that is of the first piston (3) and that constitutes the second sub-cavity (703); and when the fourth through hole (302) and/or the fifth through hole (301) are/is coupled to the second through hole (102), the first sub-cavity (702) and/or the second sub-cavity (703) communicate/communicates with the outside; or when the fourth through hole (302) and/or the fifth through hole (301) are/is staggered from the second through hole (102), the first sub-cavity (702) and/or the second sub-cavity (703) are/is isolated from the outside.

2. The apparatus according to claim 1, wherein
the housing (1) further comprises a sixth through hole and a seventh through hole, wherein the sixth through hole is disposed in a position that is of the housing (1) and that constitutes the second cavity (701), and the seventh through hole is disposed in a position that is of the housing (1) and that constitutes the first sub-cavity (702).

3. The apparatus according to claim 2, further comprising:
at least one partition apparatus, coupled to the sixth through hole and the seventh through hole and configured to: control the sixth through hole and the seventh through hole to communicate with or be isolated from the outside.

4. The apparatus according to any one of claims 1 to 3, further comprising:
a solenoid valve, coupled to the second through hole (102) and configured to: control the second through hole (102) to communicate with or be isolated from the outside.

5. The apparatus according to any one of claims 1 to 4, further comprising:
a one-way valve, coupled to the second through hole (102) and configured to: control external brake fluid to enter the second through hole (102).

6. The apparatus according to any one of claims 1 to 5, further comprising:
a first sealing component, disposed in a position that is of the cavity structure inside the housing (1) and that is at a periphery of the first through hole (101) and configured to seal a gap between the cavity structure inside the housing (1) and the second piston (2) and a gap between the first through hole (101) and the second piston (2).

7. The apparatus according to any one of claims 1 to 6, further comprising:
a second sealing component, disposed in a position that is of the cavity structure inside the housing (1) and that is at a periphery of the second through hole (102) and configured to seal a gap between the cavity structure inside the housing (1) and the first piston (3) and a gap between the second through hole (102) and the first piston (3).

8. The apparatus according to any one of claims 1 to 7, further comprising:
a third sealing component, disposed on a side surface that is of the baffle plate (6) and that is in contact with the first piston (3) and configured to seal a gap between the baffle plate (6) and the first piston (3).

9. The apparatus according to any one of claims 1 to 8, further comprising:
a pedal push rod, wherein one end of the pedal push rod is coupled to a surface that is of the second piston (2) and that is opposite to a side surface that constitutes the second cavity (701), and the pedal push rod is configured to push the second piston (2) when the pedal push rod is subjected to an external acting force.

10. A vehicle, comprising the hydraulic brake apparatus according to claims 1 to 9.

11. A hydraulic brake system, comprising a reservoir apparatus, a pressure providing and adjusting apparatus, a brake apparatus, and the hydraulic brake apparatus according to claims 1 to 9.

## Patentansprüche

1. Hydraulische Bremsvorrichtung, umfassend:
ein Gehäuse (1), wobei der Innenraum des Gehäuses (1) eine Hohlraumstruktur ist und die Hohlraumstruktur mit der Außenseite kommuniziert;
einen ersten Kolben (3), der in der Hohlraumstruktur innerhalb des Gehäuses (1) angeordnet ist, wobei der erste Kolben (3) und das Gehäuse (1) einen ersten Hohlraum bilden;
eine Prallplatte (6), die in dem ersten Hohlraum angeordnet ist und den ersten Hohlraum in einen ersten Unterhohlraum (702) und einen zweiten Unterhohlraum (703) unterteilt, wobei der erste Unterhohlraum (702) durch das Gehäuse (1), den ersten Kolben (3) und die Prallplatte (6) gebildet wird und der zweite Unterhohlraum (703) durch den ersten Kolben (3) und die Prallplatte (6) gebildet wird;
einen zweiten Kolben (2), der in der Hohlraumstruktur innerhalb des Gehäuses (1) angeordnet ist und sich außerhalb des ersten Hohlraums befindet, wobei der zweite Kolben (2), der erste Kolben (3) und das Gehäuse (1) einen zweiten Hohlraum (701) bilden; und
eine erste elastische Komponente (402), eine zweite elastische Komponente (403) und eine dritte elastische Komponente (401), die in dem ersten Unterhohlraum (702), dem zweiten Unterhohlraum (703) bzw. dem zweiten Hohlraum (701) angeordnet und dazu konfiguriert sind, die Prallplatte (6), den ersten Kolben (3) und den zweiten Kolben (2) in der Hohlraumstruktur innerhalb des Gehäuses (1) zu verschieben, wenn der zweite Kolben (2) einer von außen einwirkenden Kraft ausgesetzt ist, wobei
das Gehäuse (1) ein erstes Durchgangsloch (101) und ein zweites Durchgangsloch (102) umfasst, wobei das erste Durchgangsloch (101) an einer ersten Position des Gehäuses (1) angeordnet ist, das zweite Durchgangsloch (102) an einer zweiten Position des Gehäuses (1) angeordnet ist, die erste Position eine Position ist, in welcher der zweite Kolben (2) in der Hohlraumstruktur innerhalb des Gehäuses (1) verschoben werden kann, und die zweite Position eine Position ist, in welcher der erste Kolben (3) in der Hohlraumstruktur innerhalb des Gehäuses (1) verschoben werden kann;
der zweite Kolben (2) ein drittes Durchgangsloch (201) aufweist, wobei, wenn der zweite Kolben (2) zu dem dritten Durchgangsloch (201) verschoben wird und mit dem ersten Durchgangsloch (101) gekoppelt ist, der zweite Hohlraum (701) mit der Außenseite kommuniziert; oder wenn der zweite Kolben (2) zu dem dritten Durchgangsloch (201) verschoben wird und gegenüber dem ersten Durchgangsloch (101) versetzt ist, der zweite Hohlraum (701) von der Außenseite isoliert ist; und
der erste Kolben (3) ein viertes Durchgangsloch (302) und ein fünftes Durchgangsloch (301) umfasst, wobei das vierte Durchgangsloch (302) an einer dritten Position des ersten Kolbens (3) angeordnet ist, das fünfte Durchgangsloch (301) an einer vierten Position des ersten Kolbens (3) angeordnet ist, die dritte Position eine Position ist, die zu dem ersten Kolben (3) gehört und die den ersten Unterhohlraum (702) begründet, und die vierte Position eine Position ist, die zu dem ersten Kolben (3) gehört und die den zweiten Unterhohlraum (703) begründet; und wenn das vierte Durchgangsloch (302) und/oder das fünfte Durchgangsloch (301) mit dem zweiten Durchgangsloch (102) gekoppelt sind/ist, der erste Unterhohlraum (702) und/oder der zweite Unterhohlraum (703) mit der Außenseite kommunizieren/kommuniziert; oder wenn das vierte Durchgangsloch (302) und/oder das fünfte Durchgangsloch (301) gegenüber dem zweiten Durchgangsloch (102) versetzt sind/ist, der erste Unterhohlraum (702) und/oder der zweite Unterhohlraum (703) von der Außenseite isoliert sind/ist.

2. Vorrichtung nach Anspruch 1, wobei
das Gehäuse (1) ferner ein sechstes Durchgangsloch und ein siebtes Durchgangsloch umfasst, wobei das sechste Durchgangsloch an einer Position angeordnet ist, die zu dem Gehäuse (1) gehört und die den zweiten Hohlraum (701) begründet, und das siebte Durchgangsloch an einer Position angeordnet ist, die zu dem Gehäuse (1) gehört und die den ersten Unterhohlraum (702) begründet.

3. Vorrichtung nach Anspruch 2, ferner umfassend:
mindestens eine Trennvorrichtung, die mit dem sechsten Durchgangsloch und dem siebten Durchgangsloch gekoppelt und dazu konfiguriert ist: das sechste Durchgangsloch und das siebte Durchgangsloch so zu steuern, dass sie mit der Außenseite kommunizieren oder von ihr isoliert sind.

4. Vorrichtung nach einem der Ansprüche 1 bis 3, ferner umfassend:
ein Magnetventil, das mit dem zweiten Durchgangsloch (102) gekoppelt und dazu konfiguriert ist: das zweite Durchgangsloch (102) so zu steuern, dass es mit der Außenseite kommuniziert oder von ihr isoliert ist.

5. Vorrichtung nach einem der Ansprüche 1 bis 4, ferner umfassend:
ein Einwegventil, das mit dem zweiten Durchgangsloch (102) gekoppelt und dazu konfiguriert ist: den Eintritt externer Bremsflüssigkeit in das zweite Durchgangsloch (102) zu steuern.

6. Vorrichtung nach einem der Ansprüche 1 bis 5, ferner umfassend:
eine erste Dichtungskomponente, die an einer Position angeordnet ist, die zu der Hohlraumstruktur innerhalb des Gehäuses (1) gehört und die sich an einem Umfang des ersten Durchgangslochs (101) befindet und dazu konfiguriert ist, einen Spalt zwischen der Hohlraumstruktur innerhalb des Gehäuses (1) und dem zweiten Kolben (2) und einen Spalt zwischen dem ersten Durchgangsloch (101) und dem zweiten Kolben (2) abzudichten.

7. Vorrichtung nach einem der Ansprüche 1 bis 6, ferner umfassend:
eine zweite Dichtungskomponente, die an einer Position angeordnet ist, die zu der Hohlraumstruktur innerhalb des Gehäuses (1) gehört und die sich an einem Umfang des zweiten Durchgangslochs (102) befindet und dazu konfiguriert ist, einen Spalt zwischen der Hohlraumstruktur innerhalb des Gehäuses (1) und dem ersten Kolben (3) und einen Spalt zwischen dem zweiten Durchgangsloch (102) und dem ersten Kolben (3) abzudichten.

8. Vorrichtung nach einem der Ansprüche 1 bis 7, ferner umfassend:
eine dritte Dichtungskomponente, die an einer Seitenfläche angeordnet ist, die zu der Prallplatte (6) gehört und die mit dem ersten Kolben (3) in Kontakt steht und dazu konfiguriert ist, einen Spalt zwischen der Prallplatte (6) und dem ersten Kolben (3) abzudichten.

9. Vorrichtung nach einem der Ansprüche 1 bis 8, ferner umfassend:
eine Pedalschubstange, wobei ein Ende der Pedalschubstange mit einer Fläche gekoppelt ist, die zu dem zweiten Kolben (2) gehört und die einer Seitenfläche gegenüberliegt, die den zweiten Hohlraum (701) begründet, und die Pedalschubstange dazu konfiguriert ist, den zweiten Kolben (2) zu drücken, wenn die Pedalschubstange einer von außen einwirkenden Kraft ausgesetzt ist.

10. Fahrzeug, umfassend die hydraulische Bremsvorrichtung nach Anspruch 1 bis 9.

11. Hydraulisches Bremssystem, umfassend eine Behältervorrichtung, eine Vorrichtung zur Druckbereitstellung und -einstellung, eine Bremsvorrichtung und die hydraulische Bremsvorrichtung nach Anspruch 1 bis 9.

## Revendications

1. Appareil de freinage hydraulique, comprenant :
un boîtier (1), dans lequel l'intérieur du boîtier (1) est une structure de cavité, et la structure de cavité communique avec l'extérieur ;
un premier piston (3), disposé dans la structure de cavité à l'intérieur du boîtier (1), dans lequel le premier piston (3) et le boîtier (1) forment une première cavité ;
une plaque déflectrice (6), disposée dans la première cavité et divisant la première cavité en une première sous-cavité (702) et une seconde sous-cavité (703), dans lequel la première sous-cavité (702) est formée par le boîtier (1), le premier piston (3) et la plaque déflectrice (6), et la seconde sous-cavité (703) est formée par le premier piston (3) et la plaque déflectrice (6) ;
un second piston (2), disposé dans la structure de cavité à l'intérieur du boîtier (1) et situé à l'extérieur de la première cavité, dans lequel le second piston (2), le premier piston (3) et le boîtier (1) forment une seconde cavité (701) ; et
un premier composant élastique (402), un deuxième composant élastique (403) et un troisième composant élastique (401), disposés dans la première sous-cavité (702), la seconde sous-cavité (703) et la seconde cavité (701) respectivement et configurés pour faire coulisser la plaque déflectrice (6), le premier piston (3) et le second piston (2) dans la structure de cavité à l'intérieur du boîtier (1) lorsque le second piston (2) est soumis à une force d'action externe, dans lequel
le boîtier (1) comprend un premier trou traversant (101) et un deuxième trou traversant (102), dans lequel le premier trou traversant (101) est disposé dans une première position du boîtier (1), le deuxième trou traversant (102) est disposé dans une deuxième position du boîtier (1), la première position est une position dans laquelle le second piston (2) peut coulisser dans la structure de cavité à l'intérieur du boîtier (1), et la deuxième position est une position dans laquelle le premier piston (3) peut coulisser dans la structure de cavité à l'intérieur du boîtier (1) ;
le second piston (2) comprend un troisième trou traversant (201), dans lequel lorsque le second piston (2) coulisse vers le troisième trou traversant (201) et est couplé au premier trou traversant (101), la seconde cavité (701) communique avec l'extérieur ; ou lorsque le second piston (2) coulisse vers le troisième trou traversant (201) et est décalé par rapport au premier trou traversant (101), la seconde cavité (701) est isolée de l'extérieur ; et
le premier piston (3) comprend un quatrième trou traversant (302) et un cinquième trou traversant (301), dans lequel le quatrième trou traversant (302) est disposé dans une troisième position du premier piston (3), le cinquième trou traversant (301) est disposé dans une quatrième position du premier piston (3), la troisième position est une position qui est celle du premier piston (3) et qui constitue la première sous-cavité (702), et la quatrième position est une position qui est celle du premier piston (3) et celui qui constitue la seconde sous-cavité (703) ; et lorsque le quatrième trou traversant (302) et/ou le cinquième trou traversant (301) est/sont couplés au deuxième trou traversant (102), la première sous-cavité (702) et/ou la seconde sous-cavité (703) communique/communiquent avec l'extérieur ; ou lorsque le quatrième trou traversant (302) et/ou le cinquième trou traversant (301) est/sont décalés par rapport au deuxième trou traversant (102), la première sous-cavité (702) et/ou la seconde sous-cavité (703) est/sont isolées de l'extérieur.

2. Appareil selon la revendication 1, dans lequel le boîtier (1) comprend également un sixième trou traversant et un septième trou traversant, dans lequel le sixième trou traversant est disposé dans une position qui est celle du boîtier (1) et qui constitue la seconde cavité (701), et le septième trou traversant est disposé dans une position qui est celle du boîtier (1) et qui constitue la première sous-cavité (702).

3. Appareil selon la revendication 2, comprenant également :
au moins un appareil de séparation, couplé au sixième trou traversant et au septième trou traversant et configuré pour : commander le sixième trou traversant et le septième trou traversant pour qu'ils communiquent avec l'extérieur ou soient isolés de celui-ci.

4. Appareil selon l'une quelconque des revendications 1 à 3, comprenant également :
une électrovanne, couplée au deuxième trou traversant (102) et configurée pour : commander le deuxième trou traversant (102) pour qu'il communique avec l'extérieur ou soit isolé de celui-ci .

5. Appareil selon l'une quelconque des revendications 1 à 4, comprenant également :
une valve unidirectionnelle, couplée au deuxième trou traversant (102) et configurée pour : commander le liquide de frein externe pour qu'il entre dans le deuxième trou traversant (102).

6. Appareil selon l'une quelconque des revendications 1 à 5, comprenant également :
un premier composant d'étanchéité, disposé dans une position qui est celle de la structure de cavité à l'intérieur du boîtier (1) et qui est à une périphérie du premier trou traversant (101) et configuré pour sceller un espace entre la structure de cavité à l'intérieur du boîtier (1) et le second piston (2) et un espace entre le premier trou traversant (101) et le second piston (2).

7. Appareil selon l'une quelconque des revendications 1 à 6, comprenant également :
un deuxième composant d'étanchéité, disposé dans une position qui est celle de la structure de cavité à l'intérieur du boîtier (1) et qui est à une périphérie du deuxième trou traversant (102) et configuré pour sceller un espace entre la structure de cavité à l'intérieur du boîtier (1) et le premier piston (3) et un espace entre le deuxième trou traversant (102) et le premier piston (3).

8. Appareil selon l'une quelconque des revendications 1 à 7, comprenant également :
un troisième composant d'étanchéité, disposé sur une surface latérale qui est celle de la plaque déflectrice (6) et qui est en contact avec le premier piston (3) et configuré pour sceller un espace entre la plaque déflectrice (6) et le premier piston (3) .

9. Appareil selon l'une quelconque des revendications 1 à 8, comprenant également :
une tige de poussée de pédale, dans lequel une extrémité de la tige de poussée de pédale est couplée à une surface qui est celle du second piston (2) et qui est opposée à une surface latérale qui constitue la seconde cavité (701), et la tige de poussée de pédale est configurée pour pousser le second piston (2) lorsque la tige de poussée de pédale est soumise à une force d'action externe.

10. Véhicule, comprenant l'appareil de freinage hydraulique selon les revendications 1 à 9.

11. Système de freinage hydraulique, comprenant un appareil de réservoir, un appareil de fourniture et de réglage de pression, un appareil de freinage et l'appareil de freinage hydraulique selon les revendications 1 à 9.
